(19) Europäisches Patentamt
European Patent Office
Office européen des brevets

(11) **EP 2 107 674 B1**

(12) **EUROPEAN PATENT SPECIFICATION**

(45) Date of publication and mention
of the grant of the patent:
**20.10.2010  Bulletin 2010/42**

(51) Int Cl.:
***H02M 3/335*** *(2006.01)*

(21) Application number: **09150005.8**

(22) Date of filing: **02.01.2009**

(54) **Half-bridge LLC resonant converter with external-driven synchronous rectifiers**

Halbbrücken-LLC-Resonanzwandler mit fremdgeführten synchronen Gleichrichtern

Convertisseur résonant LLC à demi-pont doté de redresseurs synchrones avec entraînement extérieur

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority:  **01.04.2008  TW 97111901**

(43) Date of publication of application:
**07.10.2009  Bulletin 2009/41**

(73) Proprietors:
• **GlacialTech., Inc.
Jhonghe City 235, Taipei County (TW)**
• **Wang, Chih-Liang
Anle District
Keelung City 204 (TW)**

(72) Inventors:
• **Wang, Chih-Liang
204, Keelung City (TW)**
• **Yu, Ching-Sheng
248, Wugu Township (TW)**

(74) Representative: **Reichert, Werner Franz et al
Reichert & Kollegen
Bismarckplatz 8
93047 Regensburg (DE)**

(56) References cited:
**US-A- 6 111 769     US-A1- 2004 070 994
US-B1- 6 169 683     US-B1- 7 193 866**

**Description**

**BACKGROUND OF THE INVENTION**

**Field of Invention**

The present invention relates to a half-bridge LLC resonant converter with external-driven synchronous rectifiers.

**Related Art**

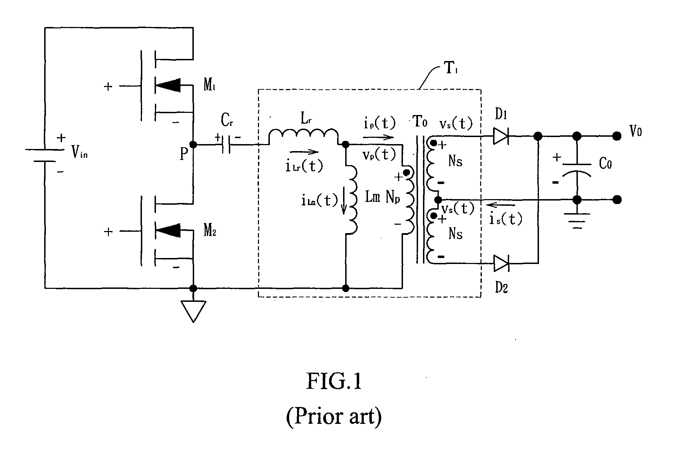

FIG 1 shows a circuit diagram of a prior art. An ideal transformer $T_0$ includes a primary winding $N_p$ and two secondary windings $N_s$. A primary circuit is connected to the $N_p$ and a secondary circuit to the two $N_s$.

The primary circuit includes a first switch transistor $M_1$, a second switch transistor $M_2$ and an LLC resonant tank, which includes a magnetizing inductor $L_m$, a resonant inductor $L_r$ and a resonant capacitor $C_r$. $M_1$ and $M_2$ are connected between an input voltage source $V_{in}$ and a primary ground terminal in a half-bridge configuration, where the point at which $M_1$, $M_2$ and the LLC resonant tank intersect is called a first node P, and the LLC resonant tank is connected between the first node P and the primary ground terminal.

It is emphatically noted that a practical transformer $T_1$ is equivalent to the integration of the ideal transformer $T_0$ including the $N_p$ and the two $N_s$, $L_m$ and a leakage inductor, where $L_m$ is in parallel with the $N_p$, and the leakage inductor is in series with the parallel circuit of $L_m$ and $N_p$. $L_m$ can be measured from the primary side with the two $N_s$ open-circuited, and the leakage inductance can be measured from the primary side with the two $N_s$ short-circuited. If the $N_p$ and the two $N_s$ of $T_1$ are wound with a sandwich structure, then an external $L_r$ is necessary, but if the $N_p$ and the two $N_s$ of $T_1$ are wound on a slotted bobbin, then the $L_r$ can be provided by the leakage inductance of $T_1$. A transformer with a slotted bobbin is used in this example.

The secondary circuit includes a first rectifier diode $D_1$, a second rectifier diode $D_2$ and an output capacitor $C_o$. $D_1$ and $D_2$ are connected in a center-tapped common-cathode rectifier configuration between the two $N_s$ and $C_o$, where the two $N_s$ are connected in a center-tapped configuration at the secondary ground terminal, and $D_1$ and $D_2$ are connected in a common-cathode rectifier configuration at the output voltage terminal with an output voltage $V_o$.

For the convenience of illustration, the circuit parameters are defined as follows: $f_s$ is the switching frequency of $M_1$ and $M_2$, $f_r = \dfrac{1}{2\pi\sqrt{L_r C_r}}$ is the resonant frequency of $L_r$ and $C_r$, $n = \dfrac{N_p}{N_s}$ is the primary-to-secondary turns ratio of $T_0$, $V_o$ is the output voltage, and $V_{or} = nV_o$ is the reflected output voltage. Regarding the circuit variables, the reference polarities of the gate-source voltages $v_{GS}^{M1}(t)$ and $v_{GS}^{M2}(t)$ of $M_1$ and $M_2$, the resonant capacitor voltage $v_{Cr}(t)$, the primary voltage $v_p(t)$ and the secondary voltage $v_s(t)$ as well as the reference directions of the resonant inductor current $i_{L_r}(t)$, the magnetizing inductor current $i_{L_m}(t)$, the primary current $i_p(t)$ and the secondary current $i_s(t)$ are also shown in FIG. 1.

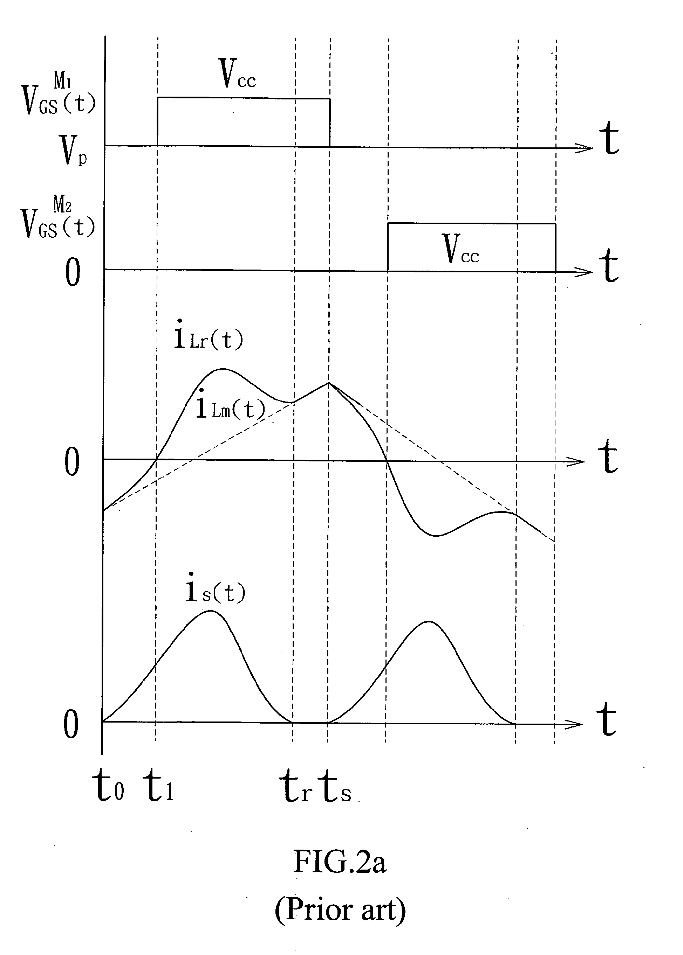

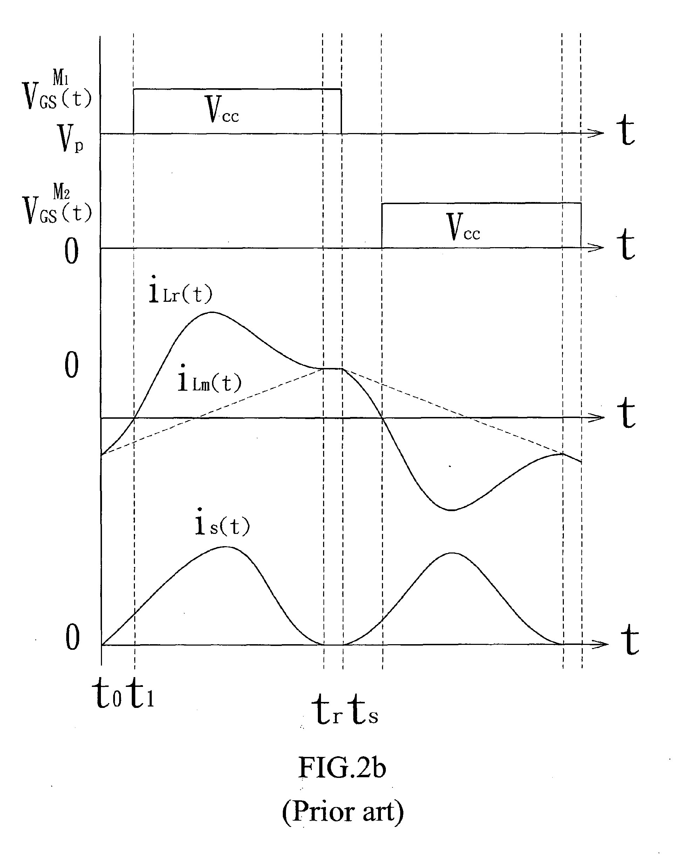

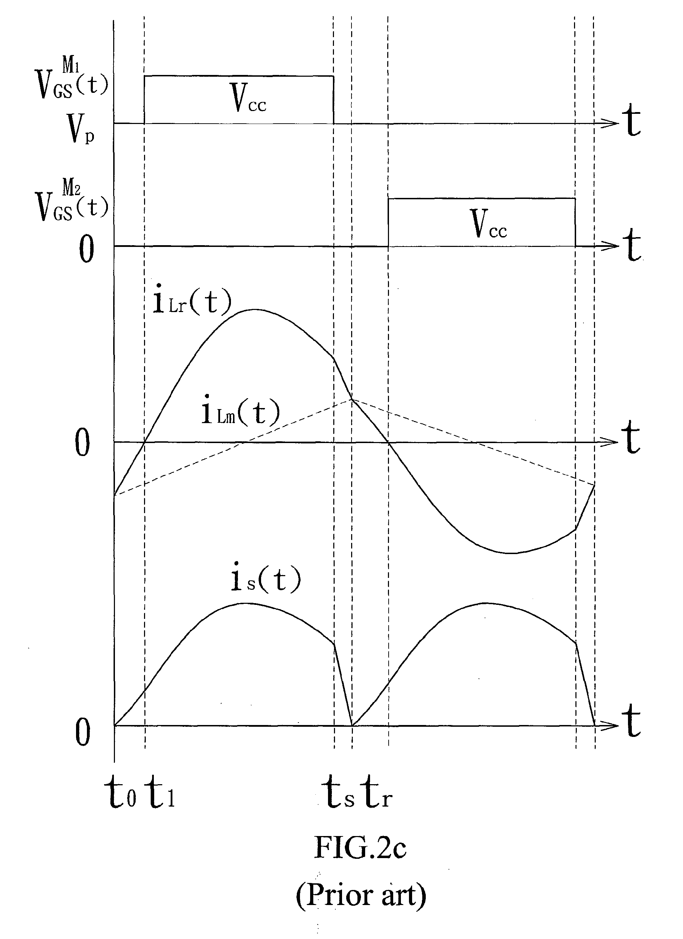

According to the conditions of $f_s < f_r$, $f_s = f_r$ and $f_s > f_r$, the waveforms of $v_{GS}^{M1}(t)$, $v_{GS}^{M2}(t)$, $i_{L_r}(t)$, $i_{L_m}(t)$ and $i_s(t)$ are shown in FIGs. 2a, 2b and 2c respectively. As shown in the figures, the waveforms of the first half period and the second half period are symmetrical, so only equivalent circuits and critical waveforms of the first half period are described and those of the second half period can be analogized using the symmetry.

Firstly, the physical meanings of $t = t_0$, $t = t_1$, $t = t_r$ and $t = t_s$ are interpreted as follows: $t = t_0$ is the time when a resonant period resumes, $t = t_1$ is the time when $i_{L_r}(t)$ crosses 0, $t = t_r$ is the time when $i_s(t)$ descends to 0 and $t = t_s$ is the time when $v_{GS}^{M1}(t)$ switches to 0.

Regardless of $f_s \leq f_r$ or $f_s > f_r$, during the interval of $t_0 \leq t \leq t_1$, $v_{GS}^{M1}(t) = 0$, $v_{GS}^{M2}(t) = 0$, $i_{L_r}(t) < 0$ and $i_{L_r} > i_{L_m}(t)$. M, and $M_2$ are turned off, $i_{L_r}(t)$ flows through the body diode of $M_1$, $i_p(t) = i_{L_r}(t) - i_{Lm}(t) > 0$ flows into the dotted terminal of $N_p$, $i_s(t) = ni_p > 0$ flows out of the dotted terminal of $N_s$, $D_1$ is turned on and $D_2$ is turned off. $L_m$ does not participate in the resonance of $L_r$ and $C_r$ due to the clamp of $V_{or}$, $i_{L_r}(t)$ and $i_s(t)$ are quasi-sinusoidal waves and the rising slope *of*

$i_{L_m}(t)$ is equal to $\dfrac{V_{or}}{L_m}$. $D_1$ switches to on state at $t = t_0$ under zero-current-switching (ZCS), and $M_1$ switches to on state during $t_0 \le t \le t_1$ under zero-voltage-switching (ZVS) and, more particularly, at $t = t_1$ under ZVS and ZCS, so the switching losses are reduced.

Under the condition of $f_s \le f_r$ (i.e. $t_r \le t_s$), $i_s(t)$ descends to 0 before $M_1$ turns off. The interval of $t_1 \le t \le t_s$ is divided into two subintervals $t_1 \le t \le t_r$ and $t_r \le t \le t_s$. During the subinterval of $t_1 \le t \le t_r$, $v_{GS}^{M1}(t) = V_{cc}$, $v_{GS}^{M2}(t) = 0$, $i_{L_r}(t) > 0$ and $i_{L_r} > i_{L_m}(t)$. $M_1$ is turned on, $M_2$ is turned off, $i_{L_r}(t)$ flows through the channel of $M_1$, $i_p(t) > 0$ flows into the dotted terminal of $N_p$, $i_s(t) > 0$ flows out of the dotted terminal of $N_s$, $D_1$ is turned on and $D_2$ is turned off. $L_m$ does not participate in the resonance of $L_r$ and $C_r$ due to the clamp of $V_{or}$, $i_{L_r}(t)$ and $i_s(t)$ are quasi-sinusoidal waves and the rising slope of $i_{L_m}(t)$ is equal to $\dfrac{V_{or}}{L_m}$. $D_1$ switches to off state at $t = t_r$ under ZCS. During the subinterval of $t_r \le t \le t_s$, $v_{GS}^{M1}(t) = V_{cc}$, $v_{GS}^{M2}(t) = 0$, $i_{L_r}(t) > 0$ and $i_{L_r} = i_{L_m}(t)$. $M_1$ is turned on, $M_2$ is turned off, $iL_r(t)$ flows through the channel of $M_1$, $i_p(t) = 0$, $i_s(t) = 0$, both $D_1$ and $D_2$ are turned off. $L_m$, participates the resonance of $L_r$ and $C_r$, and the rising slope of $i_{L_r}(t)$ and $i_{L_m}(t)$ is smaller than $\dfrac{V_{or}}{L_m}$. Especially, $\dfrac{di_{L_m}(t)}{dt} < \dfrac{V_{or}}{L_m} \Rightarrow v_s(t) = \dfrac{L_m}{n} \dfrac{di_{L_m}(t)}{dt} < V_o$, $D_1$ is reverse-biased by the voltage difference between $V_o$ and $v_s(t)$ to turn off, and $D_2$ switches to on state at $t = t_s$ under ZCS.

Under the condition of $f_s > f_r$ (i.e. $t_r > t_s$), $i_s(t)$ descends to 0 after $M_1$ turns off. The interval $t_1 \le t \le t_r$ is divided into $t_1 \le t \le t_s$ and $t_s \le t \le t_r$. During $t_1 \le t \le t_s$, $v_{GS}^{M1}(t) = V_{cc}$, $v_{GS}^{M2}(t) = 0$, $i_{L_r}(t) > 0$ and $i_{L_r}(t) > i_{L_m}(1)$. $M_1$ is turned on, $M_2$ is turned off, $i_{L_r}(t)$ flows through the channel of $M_1$, $i_p(t)$ flows into the dotted terminal of $N_p$, $i_s(t)$ flows out of the dotted terminal of $N_s$, $D_1$ is turned on and $D_2$ is turned off. $L_m$ does not participate in the resonance of $L_r$ and $C_r$ due to the clamp of $V_{or}$, $i_{L_r}(t)$ and $i_s(t)$ are quasi-sinusoidal waves and the rising slope of $i_{L_m}(t)$ is equal to $\dfrac{V_{or}}{L_m}$. During $t_s \le t \le t_r$, $v_{GS}^{M1}(t) = 0$, $v_{GS}^{M2}(t) = 0$, $i_{L_r}(t) > 0$ and $i_{L_r} > i_{LM}(t)$. Both $M_1$ and $M_2$ are turned off, $i_{L_r}(t)$ flows through the body diode of $M_2$, $i_p(t)$ flows into the dotted terminal of $N_p$, $i_s(t)$ flows out of the dotted terminal of $N_s$, $D_1$ is truned on and $D_2$ is turned off. $L_m$ does not participate in the resonance of $L_r$ and $C_r$ due to the clamp of $V_{or}$, $i_{L_r}(t)$ and $i_s(t)$ are quasi-sinusoidal waves and the rising slope $i_{L_m}(t)$ is equal to $\dfrac{V_{or}}{L_m}$. Especially, $\dfrac{di_{L_m}(t)}{dt} = \dfrac{V_{or}}{L_m} \Rightarrow v_s(t) = \dfrac{L_m}{n} \dfrac{di_{L_m}(t)}{dt} = V_o$, $D_1$ remains on. $i_s(t = t_r)$ commutates from $D_1$ to $D_2$ at $t = t_r$ under ZCS.

This conventional converter benefits from lower switching losses due to ZVS and ZCS but suffers from higher conduction losses due to the diode rectifiers. To reduce the conduction losses, external-driven synchronous rectifiers (SRs) are proposed. The primary switch transistors and the secondary SRs are driven by an IC controller and a gate driver simultaneously. Conceptually, the IC controller can be a primary IC controller or a secondary IC controller. Practically, a primary IC controller has three advantages over a secondary IC controller: (1) easier to buy from the market, (2) easier to cooperate with a primary power factor corrector and (3) easier to realize the protection functions of the converter. Based on a primary IC controller, a cost-effective half-bridge LLC resonant converter with external-driven synchronous rectifiers is proposed.

US-Patent 6,111,769 discloses an external driving circuit for a bridge type synchronous rectifier circuit having a first and second first synchronous rectifier, a primary driving circuit, and a pair of totem pole drivers. The timing signal for the first and second synchronous rectifiers is derived from the external driving circuit. The external driving circuit includes a first and second switch drivers. The external driving circuit is interfaced with the synchronous rectifier circuit by connecting first and second switch drivers to the totem pole drivers. The first and second switch drivers provides storage for circuit current which is fully discharged at the appropriate time to facilitate turning on and off the synchronous rectifiers.

## SUMMARY OF THE INVENTION

The present invention provides a half-bridge LLC resonant converter with external driven synchronous rectifiers according to claim 1. Preferred embodiments are defined in the dependent claims.

According to an aspect of the present invention, a half-bridge LLC resonant converter with external-driven synchronous rectifiers uses a primary IC controller and a gate driver to drive the primary switch transistors and the secondary synchronous rectifiers.

In correspondence with the gate drive output voltages of the primary IC controller to the primary switch transistors, the gate driver of the secondary synchronous rectifiers comprises a differential transformer if the primary IC controller outputs two ground-referenced gate drive voltages, which should be followed by a drive module for driving the primary switch transistors; or further comprises a DC shifter and a DC restorer if the primary IC controller outputs two drive voltages referred to the sources of two primary switch transistors and these two voltages can directly drive the primary switch transistors.

The drive voltage of the primary switch transistors is unipolar, and the drive voltage of the secondary synchronous rectifiers can be bipolar or unipolar.

## BRIEF DESCRIPTION OF THE DRAWINGS

FIG. 1 shows a circuit diagram of a half-bridge LLC resonant converter according to a prior art.

FIGs. 2a, 2b and 2c show voltage and current waveforms for the conditions of $f_s < f_r$, $f_r = f_r$ and $f_s > f_r$ respectively.

FIGs. 3a and 3b show a circuit diagram and drive voltage waveforms of the first embodiment according to the present invention.

FIGs. 4a and 4c show a circuit diagram and drive voltage waveforms of the second embodiment according to the present invention.

FIGs. 4b and 4c show a circuit diagram and drive voltage waveforms of the third embodiment according to the present invention.

FIGs. 5a and 5b show a circuit diagram and drive voltage waveforms of the fourth embodiment according to the present invention.

FIGs. 6a and 6c show a circuit diagram and drive voltage waveforms of the fifth embodiment according to the present invention.

FIGs. 6b and 6c show a circuit diagram and drive voltage waveforms of the sixth embodiment according to the present invention.

## DETAILED DESCRIPTION OF THE INVENTION

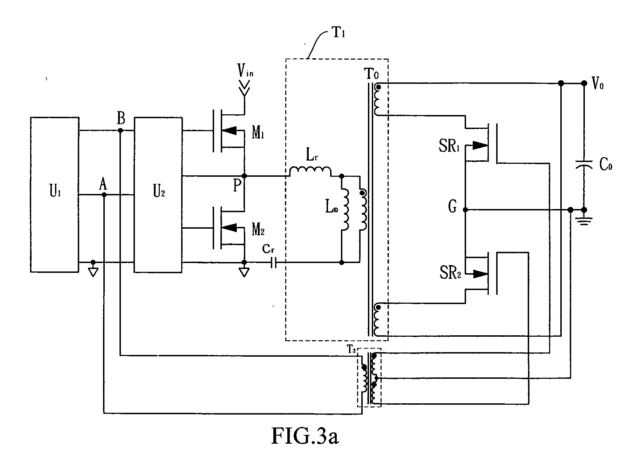

Firstly, the effect of the relationship between the switching frequency and the resonant frequency on the converter operation is illustrated with the analyses of FIG. 2a through 2c. Six exemplary circuit topologies according to the present invention are shown in FIG. 3a, FIG. 4a, FIG.4b, FIG.5a, FIG. 6a and FIG. 6b.

Under the condition of $f_s \leq f_r$, during the interval of $t_r \leq t \leq t_s$, the first switch transistor $M_1$ is turned on and the second switch transistor $M_2$ is turned off, so the first synchronous rectifier $SR_1$ is turned on and the second synchronous rectifier $SR_2$ is turned off. A reverse voltage resulting from the voltage difference between the output voltage $V_o$ and the secondary voltage $v_s(t)$ is imposed on $SR_1$. The reverse voltage imposed on the conducting $SR_1$ will cause a huge shoot-through current $i_{st}(t) = \dfrac{V_o - v_s(t)}{R_{on}}$ to burn down $SR_1$, where $R_{on}$ is the very small on-resistance of $M_1$.

Under the condition of $f_s > f_r$, during the interval of $t_s \leq t \leq t_r$, both $M_1$ and $M_2$ are turned off, so $SR_1$ and $SR_2$ are turned off. Even if the channel of $SR_1$ is cut off, $i_s(t) > 0$ still can flow through the body diode of $SR_1$, the converter

still can operate safely. Therefore, all the embodiments according to the present invention are merely applicable to the condition of $f_s > f_r$.

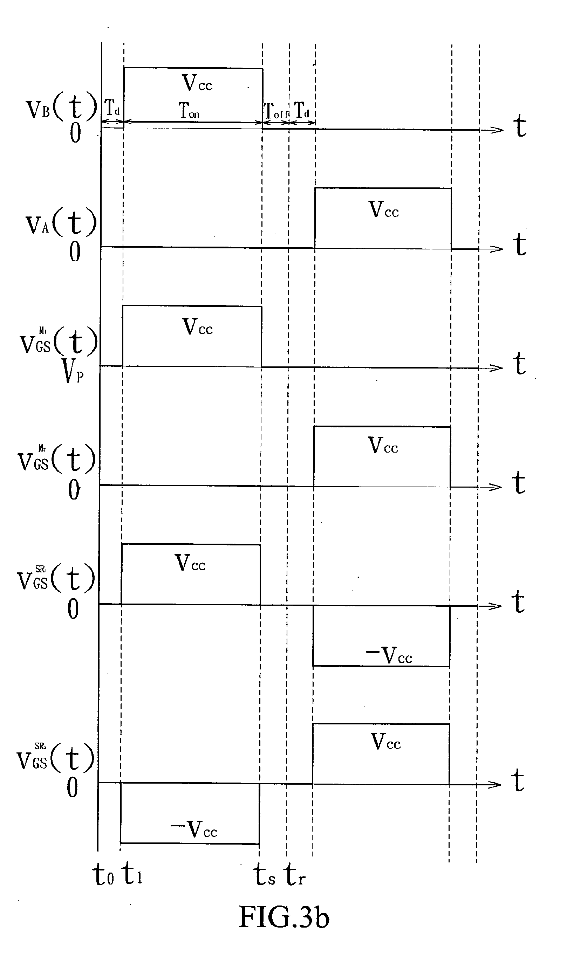

The voltage waveforms shown in FIG. 3b, FIG. 4c, FIG.5b and FIG. 6c correspond to the six embodiments shown in FIGs. 3a, 4a, 4b, 5a, 6a and 6b. It is emphatically noted that $M_1$, $M_2$, $SR_1$ and $SR_2$ according to the present invention can be implemented with a p-channel metal oxide semiconductor field effect transistor (PMOS), an n-channel metal oxide semiconductor field effect transistor (NMOS), a p-type junction field effect transistor (p-JFET) or an n-type junction field effect transistor (n-JFET). For the convenience of illustration, it is assumed in this text that $M_1$, $M_2$, $SR_1$ and $SR_2$ are all implemented with NMOS.

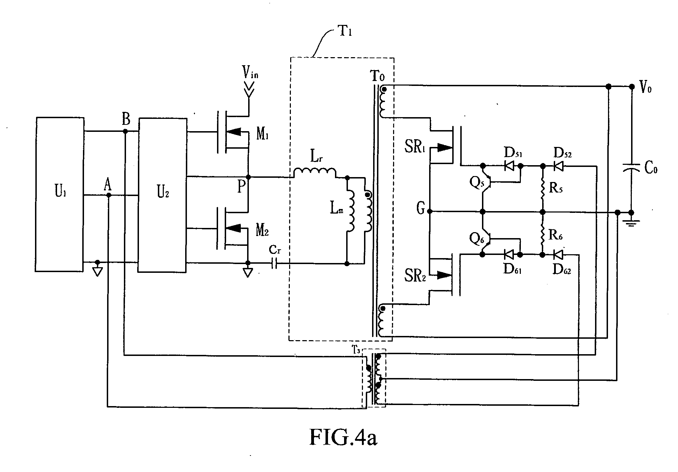

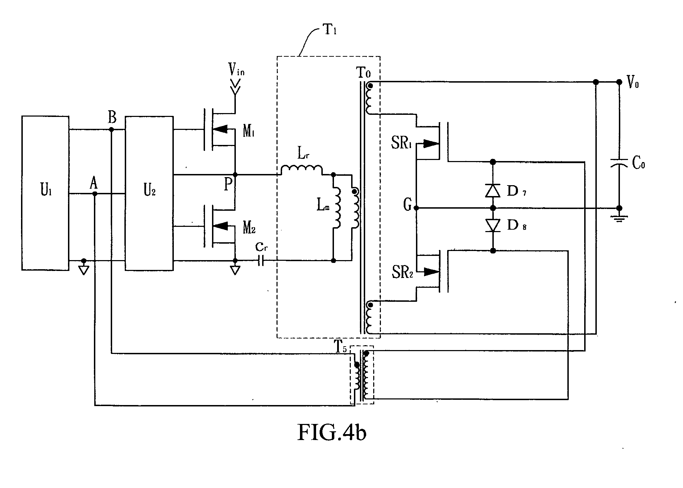

Three exemplary embodiments are shown in FIG. 3a, FIG. 4a and FIG. 4b when the primary IC controller $U_1$ outputs two ground-referenced drive voltages $v_B(t)$ and $v_A(t)$. The circuit diagram and drive voltage waveforms of the first embodiment according to the present invention are shown in FIGS. 3a and 3b, respectively. The ideal transformer $T_0$ comprises a primary winding $N_p$ and two secondary windings $N_s$. A primary circuit is connected to the $N_p$ and a secondary circuit to the two $N_s$.

The primary circuit includes a first switch transistor $M_1$, a second switch transistor $M_2$ and an LLC resonant tank, which includes a magnetizing inductor $L_m$, a resonant inductor $L_r$ and a resonant capacitor $C_r$. $M_1$ and $M_2$ are connected between an input voltage source $V_{in}$ and a primary ground terminal in a half-bridge configuration, where the point at which $M_1$, $M_2$ and LLC resonant tank intersect is called a first node P with a voltage $V_p$, and the LLC resonant tank is connected between the first node P and the primary ground terminal.

It is emphatically noted that a practical transformer $T_1$ is equivalent to the integration of the ideal transformer $T_0$ including the $N_p$ and the two $N_s$, $L_m$ and a leakage inductor, where $L_m$ is in parallel with the $N_p$, and the leakage inductor is in series with the parallel circuit of $L_m$ and $N_p$. $L_m$ can be measured from the primary side with the two $N_s$ open-circuited, and the leakage inductance can be measured from the primary side with the two $N_s$ short-circuited. If the $N_p$ and the two $N_s$ of $T_1$ are wound with a sandwich structure, then an external $L_r$ is necessary, but if the $N_p$ and the two $N_s$ of $T_1$ are wound on a slotted bobbin, then the $L_r$ can be provided by the leakage inductance of $T_1$. A transformer with a slotted bobbin is used in this example hereafter but it can be replaced by an ordinary transformer having a sandwich winding structure in series with an external $L_r$.

When $M_1$ is turned on but $M_2$ is turned off, $V_p$ is equal to $V_{in}$, but when $M_1$ is turned off but $M_2$ is turned on, $V_P$ is equal to 0. This means that the potential $V_p$ is fluctuating. The output voltages $v_B(t)$ and $v_A(t)$ of $U_1$ are referred to the primary ground, so they cannot be directly used as the gate-source voltages $v_{GS}^{M_1}(t)$ and $v_{GS}^{M_2}(t)$ for $M_1$ and $M_2$, especially for $M_1$. In this case, an IC-based or a transformer-based driver module $U_2$ is needed to convert $v_B(t)$ and $v_A(t)$ referred to the primary ground into $v_{GS}^{M_1}(t)$ and $v_{GS}^{M_2}(t)$ referred to the sources to $M_1$ and $M_2$.

The secondary circuit includes a first synchronous rectifier $SR_1$, a second synchronous rectifier $SR_2$ and an output capacitor $C_o$. $SR_1$ and $SR_2$ are connected in a center-tapped common-source rectifier configuration between the two $N_s$ and the secondary ground terminal, where the two $N_s$ are connected at the output voltage terminal and the common source of $SR_1$ and $SR_2$ is connected at the secondary ground terminal G.

$SR_1$ and $SR_2$ are driven by a differential transformer $T_3$, which has a primary winding and two secondary windings as well as a 1:1:1 primary-to-secondary turns ratio, so a primary bipolar differential voltage $v_{T_3}(t) = v_B(t) - v_A(t)$ of $T_3$ generates two secondary bipolar gate-source voltages $v_{GS}^{SR_1}(t)$ and $v_{GS}^{SR_2}(t)$ of $SR_1$ and $SR_2$. $v_{T_3}(t)$, $v_{GS}^{SR_1}(t)$ and $v_{GS}^{SR_2}(t)$ are listed in Table 1:

Table 1

| $v_{T_3}(t)$ | $v_{GS}^{SR_1}(t)$ | $v_{GS}^{SR_2}(t)$ |
|---|---|---|
| $V_{cc}$ | $V_{cc}$ | $-V_{cc}$ |
| 0 | 0 | 0 |
| $-V_{cc}$ | $-V_{cc}$ | $V_{cc}$ |

The corresponding voltage waveforms of $v_A(t)$, $v_B(t)$, $v_{GS}^{M_1}(t)$; $v_{GS}^{M_2}(t)$, $v_{GS}^{SR_1}(t)$ and $v_{GS}^{SR_2}(t)$ are shown in FIG. 3b.

A circuit diagram of the second embodiment according to the present invention is shown in FIG. 4a, where two half-wave rectifiers and two fast turn-off circuits are connected between the secondary windings of $T_3$ and the gates of $SR_1$ and $SR_2$, respectively. One of the two half-wave rectifiers comprises a diode $D_{52}$ and a resistor $R_5$ for $SR_1$, and the other a diode $D_{62}$ and a resistor $R_6$ for $SR_2$. One of the two fast turn-off circuits comprises a diode $D_{51}$ and a PNP bipolar transistor $Q_5$ for $SR_1$, and the other a diode $D_{61}$ and a PNP bipolar transistor $Q_6$ for $SR_2$.

$v_{GS}^{SR_1}(t)$ and $v_{GS}^{SR_2}(t)$ are provided by two voltages, which are first induced by the two secondary windings of $T_3$ and then processed by the half-wave rectifiers as well as the fast turn-off circuits. When $v_{T_3}(t) = V_{cc}$, $D_{52}$, $D_{51}$ and $Q_6$ are turned on but $Q_5$, $D_{62}$ and $D_{61}$ are turned off, so $SR_1$ is turned on but $SR_2$ is turned off. When $v_{T_3}(t) = 0$, $D_{52}$, $D_{51}$, $D_{62}$ and $D_{61}$ are turned off but $Q_5$ and $Q_6$ are turned on, so both $SR_1$ and $SR_2$ are turned off. When $v_{T_3}(t) = -V_{cc}$, $D_{62}$, $D_{61}$ and $Q_5$ are turned on but $Q_6$, $D_{52}$ and $D_{51}$ are turned off, so $SR_2$ is turned on but $SR_1$ is turned off. $v_{T_3}(t)$, $v_{GS}^{SR_1}(t)$ and $v_{GS}^{SR_2}(t)$ are listed in Table 2:

Table 2

| $v_{T_3}(t)$ | $v_{GS}^{SR_1}(t)$ | $v_{GS}^{SR_2}(t)$ |
|---|---|---|
| $V_{cc}$ | $V_{cc}$ | 0 |
| 0 | 0 | 0 |
| $-V_{cc}$ | 0 | $V_{cc}$ |

A circuit diagram of the third embodiment according to the present invention is shown in FIG. 4b. $v_{GS}^{SR_1}(t)$ and $v_{GS}^{SR_2}(t)$ are provided by a differential transformer $T_5$ and a signal distributor, which comprises a diode $D_7$ and a diode $D_8$. $T_5$ has a primary winding and a secondary winding as well as a 1:1 primary-to-secondary turns ratio, so a primary bipolar differential voltage $v_{T_5}(t) = v_B(t) - v_A(t)$ of $T_5$ generates an identical secondary bipolar differential voltage. $D_7$ and $D_8$ are connected in a common-anode configuration between the secondary winding of $T_5$ and the gates of $SR_1$ and $SR_2$. The signal distributor is used for converting the secondary bipolar differential voltage into two unipolar drive voltages as well as distributing these two voltages to $SR_1$ and $SR_2$ respectively.

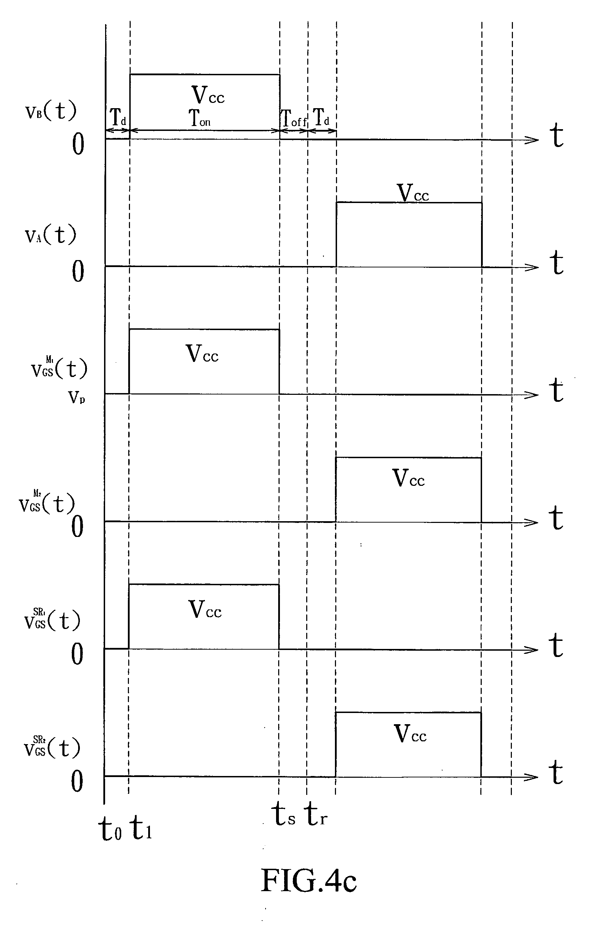

When $v_{T_5}(t) = V_{cc}$, $D_8$ is turned on but $D_7$ is turned off, so $SR_1$ is turned on but $SR_2$ is turned off. When $v_{T_5}(t) = $ , both $D_7$ and $D_8$ are turned off, so both $SR_1$ and $SR_2$ are turned off. When $v_{T_5}(t) = V_{cc}$, $D_7$ is turned on but $D_8$ is turned off, so $SR_2$ is turned on but $SR_1$ is turned off. $v_{T_5}(t)$, $v_{GS}^{SR_1}(t)$ and $v_{GS}^{SR_2}(t)$ are listed in Table 3, and the corresponding voltage waveforms of $v_A(t)$, $v_B(t)$, $v_{GS}^{M_1}(t)$, $v_{GS}^{M_2}(t)$, $v_{GS}^{SR_1}(t)$ and $v_{GS}^{SR_2}(t)$ of the second and the third embodiments are shown in FIG. 4c.

Table 3

| $v_{T_5}(t)$ | $v_{GS}^{SR_1}(t)$ | $v_{GS}^{SR_2}(t)$ |
|---|---|---|
| $V_{cc}$ | $V_{cc}$ | 0 |
| 0 | 0 | 0 |
| $-V_{cc}$ | 0 | $V_{cc}$ |

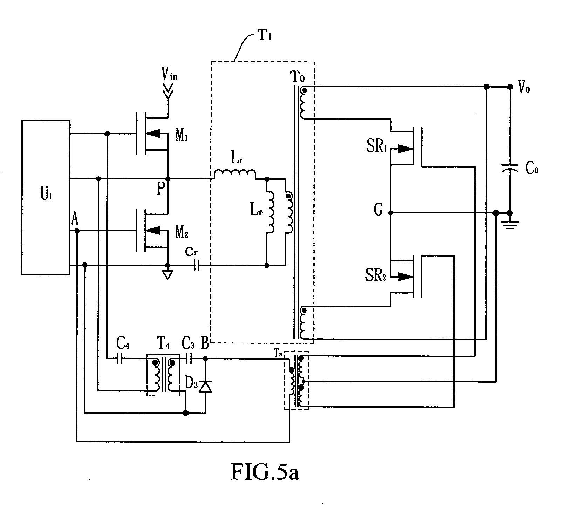

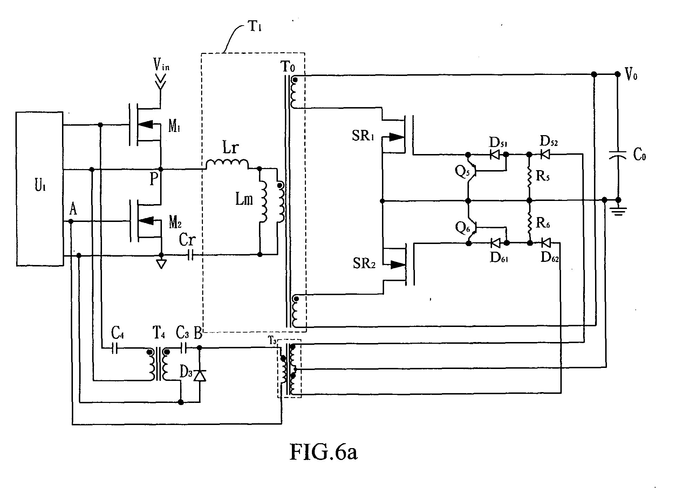

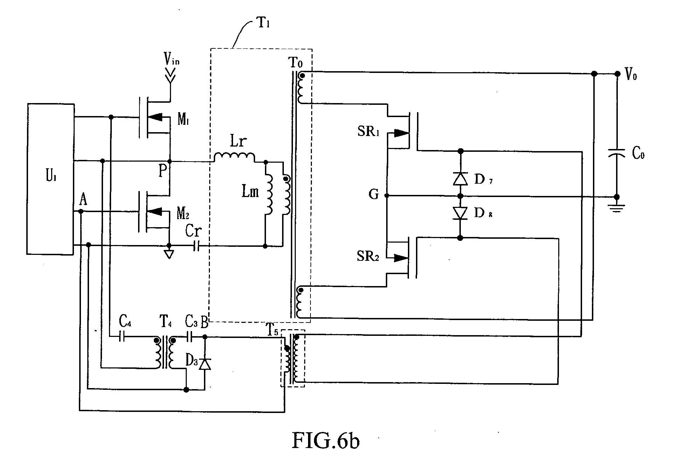

Three exemplary embodiments are shown in FIG. 5a, FIG. 6a and FIG.6b, when the primary IC controller $U_1$ outputs two drive voltages referred to the sources of $M_1$ and $M_2$ for directly driving $M_1$, and $M_2$. However, the output drive voltage of $U_1$ for $M_1$ is referred to the source of $M_1$ but not the primary ground instead, so it cannot be directly used as $v_B(t)$ on $T_3$, but the output drive voltage of $U_1$ for $M_2$ is referred to the primary ground, so it can be used as $v_A(t)$ on $T_3$. In view of this, the combined circuit of a DC shifter and a DC restorer is used to convert the output drive voltage of $U_1$ for $M_1$ referred to the source of $M_1$ into $v_B(t)$ referred to the primary ground. The DC shifter comprises a capacitor $C_4$ and a pulse transformer $T_4$ that has a primary winding and a secondary winding as well as a 1:1 primary-to-secondary turns ratio. The DC restorer comprises a capacitor $C_3$ and a diode $D_3$. $T_3$ is connected between the DC restorer and the gates of $SR_1$ and $SR_2$ to convert a primary bipolar voltage $v_{T_3}(t) = V_B(t) - v_A(t)$ into two secondary bipolar voltages

$$v_{GS}^{SR_1}(t) \text{ and } v_{GS}^{SR_2}(t).$$

The DC shifter converts the output drive voltage of $U_1$ for $M_1$ to an AC voltage, and then the DC restorer converts the AC voltage back to a DC voltage referred to the primary ground. The voltage across $C_4$ can be derived from the volt-seconds product equilibrium equation:

$$(V_{cc} - V_{C4})D = V_{C4}(1 - D) \Rightarrow V_{C4} = DV_{cc}$$

, where $D$ is the duty ratio of $M_1$ and $D \approx 0.5 \Rightarrow V_{C4} = DV_{cc} \approx 0.5V_{cc}$, so $V_{C4}$ can be viewed as a constant voltage source during a switching period. The voltage across the secondary winding of $T_4$ can be expressed as:

$$v_w(t) = \begin{cases} V_{cc} - V_{C_4}, & M_1 \text{ on and } D_3 \text{ off} \\ -V_{C_4}, & M_1 \text{ off and } D_3 \text{ on} \end{cases}$$

When $D_3$ is turned on, $C_3$ is recharged to $V_{C4}$. Therefore, the voltage across $C_3$, $V_{C3}=V_{C4} \approx 0.5V_{cc}$, can be also viewed as a constant voltage source during a switching period.

The voltage difference between the node B and the primary ground terminal can be expressed as:

$$v_B(t) = V_{C_3} + v_w(t) = V_{C_4} + \begin{cases} V_{cc} - V_{C_4}, & M_1 \text{ on and } D_3 \text{ off} \\ -V_{C_4}, & M_1 \text{ off and } D_3 \text{ on} \end{cases} = \begin{cases} V_{cc}, & M_1 \text{ on and } D_3 \text{ off} \\ 0, & M_1 \text{ off and } D_3 \text{ on} \end{cases}$$

The voltage of the node B is denoted as $v_B(t)$ referred to the primary ground, so the differential voltage $v_{T_3}(t)=v_B(t)-vA(t)$ can be imposed on $T_3$ to generate $v_{GS}^{SR_1}(t)$ and $v_{GS}^{SR_2}(t)$.

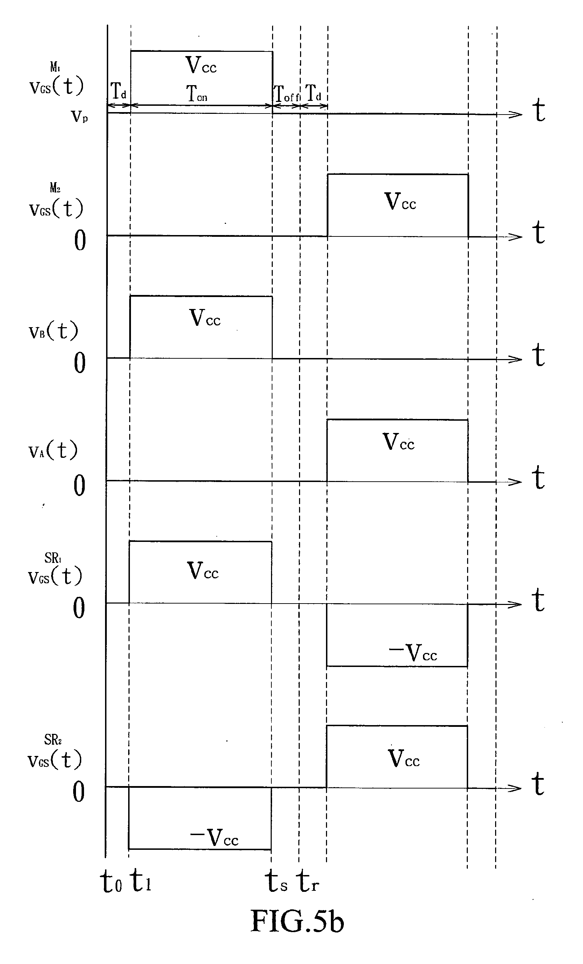

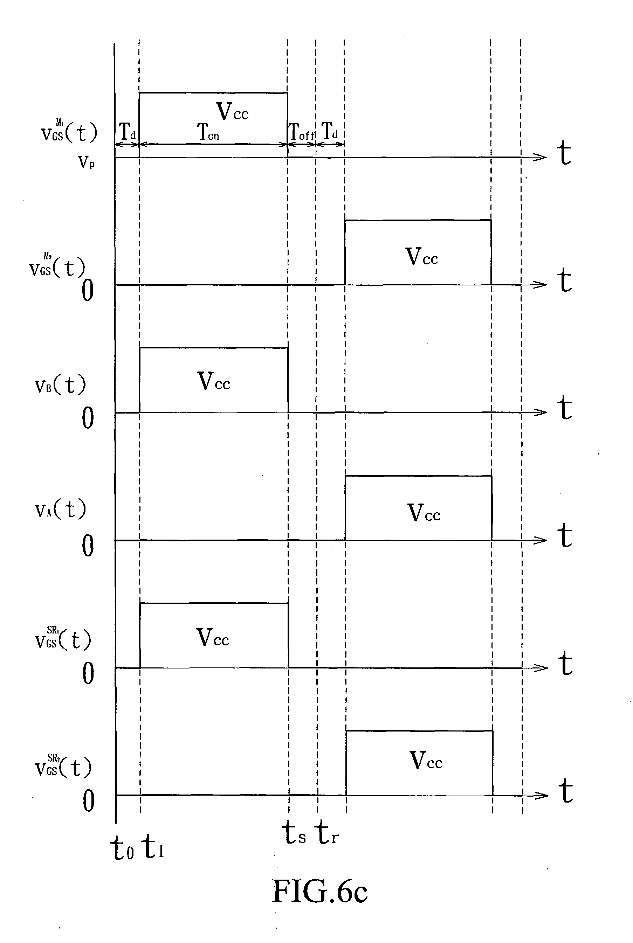

The secondary circuit of the fourth embodiment shown in FIG. 5a is the same as that of the first embodiment shown in FIG. 3a, so they have similar voltage waveforms shown in FIGs. 3b and 5b. The fifth and sixth embodiments shown in FIG.6a and FIG.6b respectively have the same primary circuit as the fourth embodiment shown in FIG. 5a as well as the same secondary circuit as the second and third embodiments shown in FIG. 4a and FIG. 4b, so they have similar voltage waveforms shown in FIGs. 4c and 6c. The operational principles of the fifth and the sixth embodiments can be inferred from the aforementioned embodiments, and will not be restated here.

**Claims**

1. A half-bridge LLC resonant converter with external-driven synchronous rectifiers ($SR_1$, $SR_2$), comprising:

   a first switch transistor ($M_1$) and a second switch transistor ($M_2$) connected between an input voltage ($V_{in}$) source and a primary ground terminal in a half-bridge configuration, wherein the connection point of said first and said second switch transistors ($M_1$, $M_2$) is called a switching node (P);

an LLC resonant tank connected between said switching node and said primary ground terminal and comprising a magnetizing inductor ($L_m$), a resonant inductor ($L_r$) and a resonant capacitor ($C_r$), wherein said magnetizing inductor ($L_m$) and said resonant inductor ($L_r$) are provided by a self inductance and a leakage inductance of a primary winding ($N_P$) of a power transformer ($T_0$);

a power loop connected between a first secondary winding ($N_P$) and a second secondary winding ($N_P$) of said power transformer ($T_0$), wherein said power loop comprises a first synchronous rectifier transistor ($SR_1$) a second synchronous rectifier transistor ($SR_2$) and a filter capacitor (Co), said first and said second synchronous rectifier transistors are connected in a center-tapped common-source rectifier configuration between said first and said second secondary windings ($N_S$) of said power transformer ($T_0$) and a secondary ground terminal (G), the other two terminals of said first and said second secondary windings ($N_S$) are connected to an output voltage terminal (Vo), and said filter capacitor is connected between said output voltage terminal and said secondary ground terminal (G);

a primary IC controller ($U_1$) having four pins connected to two gates and two sources of said first and said second switch transistors ($M_1$, $M_2$); and

a gate driver connected between said primary IC controller ($U_1$) and two gates and two sources of said first and said second synchronous rectifier transistors, wherein said gate driver comprises:

a differential transformer ($T_3$) used to drive said first and said second synchronous rectifier transistors;

**characterized in that**

said gate driver further comprises:

a DC shifter comprising a shifter capacitor ($C_4$) and a pulse transformer (T4) having a 1:1 primary-to-secondary turns ratio, wherein said shifter capacitor and a primary winding ($N_P$) of said pulse transformer ($T_4$) are connected in series between a gate of said first switch transistor and said switching node; and

a DC restorer comprising a restorer capacitor ($C_3$) and a diode ($D_3$), wherein a terminal of said secondary winding ($N_s$) of said pulse transformer ($T_4$) is connected to an electrode of said restorer capacitor ($C_3$); the other electrode of said restorer capacitor ($C_3$) is connected to a cathode of said diode ($D_3$); an anode of said diode ($D_3$) is connected to the other terminal of said secondary winding (Ns) of said pulse transformer ($T_4$); said cathode and said anode of said diode are respectively connected to a terminal of a primary winding ($N_P$) of said differential transformer ($T_3$) and said primary ground terminal; the other terminal of a primary winding ($N_P$) of said differential transformer ($T_3$) is connected to a gate of said second switch transistor ($M_2$).

2. The half-bridge LLC resonant converter with external-driven synchronous rectifiers ($SR_1$, $SR_2$) according to claim 1, wherein said differential transformer ($T_3$) comprises two secondary windings ($N_s$) connected in a center-tapped configuration, said center-tapped node is connected to said secondary ground terminal, and the other terminals of the two secondary windings ($N_s$) of said differential transformer ($T_3$) are connected to two gates of said first and said second synchronous rectifier transistors, respectively.

3. The half-bridge LLC resonant converter with external-driven synchronous rectifiers ($SR_1$, $SR_2$) according to claim 2, further comprising two combination circuits respectively connected between said two secondary windings ($N_s$) of said differential transformer ($T_3$) and said two gates of said first and said second synchronous rectifier transistors, wherein each of said two combination circuits comprises a half-wave rectifier and a fast turn-off circuit connected in cascade, said half-wave rectifier comprises a diode ($D_{52}$, $D_{62}$) and a resistor ($R_5$, $R_6$) connected in series, and said fast turn-off circuit comprises a diode ($D_{51}$, $D_{61}$) and a PNP bipolar transistor ($Q_5$, $Q_6$) connected in an interlock configuration.

4. The half-bridge LLC resonant converter with external-driven synchronous rectifiers ($SR_s$) according to claim 1, further comprising a signal distributor constructed by two diodes ($D_7$, $D_8$) in a common-anode configuration, wherein said differential transformer ($T_3$) comprises one secondary winding ($N_s$) and has a 1:1 primary-to-secondary turns ratio, said common-anode is connected to said secondary ground terminal and said two cathodes of said signal distributor are connected to two terminals of said secondary winding ($N_s$) of said differential transformer ($T_3$) and said two gates of said first and said second synchronous rectifier transistors.

**Patentansprüche**

1. LLC Resonanzwandler in Halbbrückenanordnung mit fremdgeführten Synchrongleichrichtern ($SR_1$, $SR_2$), umfas-

send:

einen ersten Schalttransistor (M$_1$) und einen zweiten Schalttransistor (M$_2$), welche in einer Halbbrückenanordnung zwischen einer Spannungsquelle für die Eingangsspannung (V$_{in}$) und einem primären Masseanschluss geschaltet sind, wobei der Verbindungspunkt des ersten und des zweiten Schalttransistors (M$_1$, M$_2$) als ein Schaltknoten (P) bezeichnet wird;

einen resonanten LLC Schwingkreis, welcher zwischen dem Schaltknoten und dem primären Masseanschluss geschaltet ist und eine magnetisierende Induktivität (L$_m$), eine resonante Induktivität (L$_r$) sowie eine resonante Kapazität (C$_r$) umfasst, wobei die magnetisierende Induktivität (L$_m$) und die resonante Induktivität (L$_r$) durch eine Selbstinduktivität und eine Streuinduktivität einer Primärwicklung (N$_P$) eines Leistungstransformators (T$_0$) gegeben sind;

einen Leistungskreis, welcher zwischen einer ersten Sekundärwicklung (N$_P$) und einer zweiten Sekundärwicklung (N$_P$) des Leistungstransformators (T$_0$) angeschlossen ist, wobei der Leistungskreis einen ersten Synchrongleichrichtertransistor (SR$_1$), einen zweiten Synchrongleichrichtertransistor (SR$_2$) und einen Filterkondensator (C$_0$) umfasst, wobei der erste und der zweite Synchrongleichrichtertransistor (SR$_1$, SR$_2$) in einer Gleichrichteranordnung mit Mittelabgriff und gemeinsamem Source-Anschluss zwischen die erste und die zweite Sekundärwicklung (N$_s$) des Leistungstransformators (T$_0$) und einen sekundären Masseanschluss (G) geschaltet sind, wobei die beiden übrigen Kontakte der ersten und zweiten Sekundärwicklungen (N$_s$) mit einem Abgriff für die Ausgangsspannung (V$_0$) verbunden sind, und wobei der Filterkondensator (C$_0$) zwischen den Abgriff für die Ausgangsspannung (V$_0$) und den sekundären Masseanschluss (G) geschaltet ist;

einen primären IC Controller (U$_1$) mit vier Pins, welche mit zwei Gates und zwei Eingängen des ersten und des zweiten Schalttransistors (M$_1$, M$_2$) verbunden sind; und

eine Gate-Steuerung, welche zwischen dem primären IC Controller (U$_1$) und zwei Gates und zwei Eingängen des ersten und zweiten Synchrongleichrichtertransistors (SR$_1$, SR$_2$) geschaltet ist, wobei die Gate-Steuerung umfasst:

einen Differentialtransformator (T$_3$) zur Steuerung des ersten und zweiten Synchrongleichrichtertransistors (SR$_1$, SR$_2$);

**dadurch gekennzeichnet, dass** die Gate-Steuerung ferner umfasst:

einen Gleichstrompegelschieber, welcher einen Schieberkondensator (C$_4$) und einen Pulstransformator (T$_4$) mit einem 1:1 Übersetzungsverhältnis umfasst, wobei der Schieberkondensator (C$_4$) und eine Primärwicklung (N$_P$) des Pulstransformators (T$_4$) zwischen einem Gate des ersten Schalttransistors (M$_1$) und dem Schaltknoten (P) in Reihe geschaltet sind; und

eine Klemmschaltung, welche einen Koppelkondensator (C$_3$) und eine Diode (D$_3$) umfasst, wobei ein Kontakt der Sekundärwicklung (N$_s$) des Pulstransformators (T$_4$) mit einer Elektrode des Koppelkondensators (C$_3$) verbunden ist; die andere Elektrode des Koppelkondensators (C$_3$) mit einer Kathode der Diode (D$_3$) verbunden ist; eine Anode der Diode (D$_3$) mit dem anderen Kontakt der Sekundärwicklung (N$_s$) des Pulstransformators (T$_4$) verbunden ist; die Kathode und die Anode der Diode mit einem Kontakt einer Primärwicklung (N$_P$) des Differentialtransformators (T$_3$) bzw. dem primären Masseanschluss verbunden sind; und der andere Kontakt einer Primärwicklung (N$_P$) des Differentialtransformators (T$_3$) mit einem Gate des zweiten Schalttransistors (M$_2$) verbunden ist.

2. LLC Resonanzwandler in Halbbrückenanordnung mit fremdgeführten Synchrongleichrichtern (SR$_1$, SR$_2$) nach Anspruch 1, wobei der Differentialtransformator (T$_3$) zwei Sekundärwicklungen (N$_s$) umfasst, die in einer Mittelabgriffsanordnung angeschlossen sind, wobei der Mittelabgriff mit dem sekundären Masseanschluss (G) verbunden ist, und die anderen Anschlüsse der beiden Sekundärwicklungen (N$_s$) des Differentialtransformators (T$_3$) mit zwei Gates des ersten bzw. des zweiten Synchrongleichrichtertransistors (SR$_1$, SR$_2$) verbunden sind.

3. LLC Resonanzwandler in Halbbrückenanordnung mit fremdgeführten Synchrongleichrichtern (SR$_1$, SR$_2$) nach Anspruch 2, welcher ferner zwei Verknüpfungsschaltungen umfasst, welche jeweils zwischen eine der beiden Sekundärwicklungen (N$_s$) des Differentialtransformators (T$_3$) und eines der beiden Gates des ersten beziehungsweise zweiten Synchrongleichrichtertransistors (SR$_1$, SR$_2$) geschaltet sind, wobei jede der beiden Verknüpfungsschaltungen einen Halbwellengleichrichter und einen Schnellabschaltkreis in Kaskadenschaltung umfasst, wobei der Halbwellengleichrichter eine Diode (D$_{52}$, D$_{62}$) und einen Widerstand (R$_5$, R$_6$) in Reihenschaltung umfasst, und wobei der Schnellabschaltkreis eine Diode (D$_{51}$, D$_{61}$) und einen PNP Bipolartransistor (Q$_5$, Q$_6$) umfasst, welche in einer Sperranordnung verbunden sind.

**4.** LLC Resonanzwandler in Halbbrückenanordnung mit fremdgeführten Synchrongleichrichtern (SR$_s$) nach Anspruch 1, welcher ferner einen Signalverteiler aus zwei Dioden (D$_7$, D$_8$) in einer Anordnung mit gemeinsamer Anode umfasst, wobei der Differentialtransformator (T$_3$) eine Sekundärwicklung (N$_S$) umfasst und ein 1:1 Übersetzungsverhältnis aufweist, die gemeinsame Anode mit dem sekundären Masseanschluss (G) verbunden ist, und die beiden Kathoden des Signalverteilers mit zwei Anschlüssen der Sekundärwicklung (N$_s$) des Differentialtransformators (T$_3$) und den zwei Gates des ersten und des zweiten Synchrongleichrichtertransistors (SR$_1$, SR$_2$) verbunden sind.

**Revendications**

**1.** Convertisseur à résonance LLC en demi-pont avec redresseurs synchrones à commande externe (SR$_1$, SR$_2$), comprenant :

un premier transistor de commutation (M$_1$) et un deuxième transistor de commutation (M$_2$) raccordés entre une source de tension d'entrée (V$_{in}$) et une borne de terre primaire en une configuration demi-pont, où le point de raccordement desdits premier et deuxième transistors de commutation (M$_1$, M$_2$) est appelé noeud de commutation (P) ;

un réservoir à résonance LLC raccordé entre ledit noeud de commutation et ladite borne de terre primaire et comprenant une inductance magnétisante (L$_m$), une inductance résonante (L$_r$) et un condensateur résonant (C$_r$), étant donné que ladite inductance magnétisante (L$_m$) et ladite inductance résonante (L$_r$) sont fournies par une auto-inductance et une inductance de fuite d'un bobinage primaire (N$_P$) d'un transformateur de puissance (T$_0$) ;

une boucle de puissance raccordée entre un premier bobinage secondaire (N$_P$) et un deuxième bobinage secondaire (N$_P$) dudit transformateur de puissance (T$_0$), dans laquelle ladite boucle de puissance comprend un premier transformateur redresseur synchrone (SR$_1$), un deuxième transformateur redresseur synchrone (SR$_2$) et un condensateur filtre (C$_0$), étant donné que lesdits premier et deuxième transformateurs redresseurs synchrones sont raccordés en une configuration de redresseurs à source commune et à prise médiane entre lesdits premier et deuxième bobinages secondaires (N$_s$) dudit transformateur de puissance (T$_0$) et une borne de terre secondaire (G), les deux autres bornes desdits premier et deuxième bobinages secondaires (N$_s$) sont raccordées à une borne de tension de sortie (V$_0$) et ledit condensateur filtre est raccordé entre ladite borne de tension de sortie et ladite borne de terre secondaire (G) ;

un contrôleur IC primaire (U$_1$) présentant quatre broches raccordées à deux grilles et deux sources desdits premier et deuxième transistors de commutation (M$_1$, M$_2$) ; et

une commande de grille raccordée entre ledit contrôleur IC primaire (U$_1$) et deux grilles et deux sources desdits premier et deuxième transistors redresseurs synchrones, étant donné que ladite commande de grille comprend :

un transformateur différentiel (T$_3$) utilisé pour commander lesdits premier et deuxième transistors redresseurs synchrones ;
**caractérisé en ce que ladite commande de grille comprend en outre :**

un dispositif de déphasage à courant continu DC comprenant un condensateur de déphasage (C$_4$) et un transformateur d'impulsions (T$_4$) présentant un rapport de tours primaire à secondaire de 1:1, étant donné que ledit condensateur de déphasage et un bobinage primaire (N$_P$) dudit transformateur d'impulsions (T$_4$) sont raccordés en série entre une grille dudit premier transistor de commutation et ledit noeud de commutation ; et

un restaurateur à courant continu DC comprenant un condensateur restaurateur (C$_3$) et une diode (D$_3$), étant donné qu'une borne dudit bobinage secondaire (N$_S$) dudit transformateur d'impulsions (T$_4$) est raccordée à une électrode dudit condensateur restaurateur (C$_3$) ; l'autre électrode dudit condensateur restaurateur (C$_3$) est raccordée à une cathode de ladite diode (D$_3$) ; une anode de ladite diode (D$_3$) est raccordée à l'autre borne dudit bobinage secondaire (N$_S$) dudit transformateur d'impulsions (T$_4$) ; ladite cathode et ladite anode de ladite diode sont respectivement raccordées à une borne d'un bobinage primaire (N$_P$) dudit transformateur différentiel (T$_3$) et à ladite borne de terre primaire ; l'autre borne d'un bobinage primaire (N$_P$) dudit transformateur différentiel (T$_3$) est raccordée à une grille dudit deuxième transistor de commutation (M$_2$).

**2.** Convertisseur à résonance LLC en demi-pont avec redresseurs synchrones à commande externe (SR$_1$, SR$_2$) selon la revendication 1, dans lequel ledit transformateur différentiel (T$_3$) comprend deux bobinages secondaires (N$_S$) raccordés en une configuration à prise médiane, ledit noeud à prise médiane est raccordé à ladite borne de terre secondaire, et les autres bornes des deux bobinages secondaires (N$_S$) dudit transformateur différentiel (T$_3$) sont raccordées respectivement à deux grilles desdits premier et deuxième transformateurs redresseurs synchrones.

**3.** Convertisseur à résonance LLC en demi-pont avec redresseurs synchrones à commande externe (SR$_1$, SR$_2$) selon la revendication 2, comprenant en outre deux circuits de combinaison raccordés respectivement entre lesdits deux bobinages secondaires (N$_S$) dudit transformateur différentiel (T$_3$) et lesdites deux grilles desdits premier et deuxième transistors redresseurs synchrones, étant donné que chacun des deux circuits de combinaison comprend un redresseur demi-onde et un circuit à déconnexion rapide raccordés en cascade, ledit redresseur demi-onde comprend une diode (D$_{52}$, D$_{62}$) et un résistor (R$_5$, R$_6$) raccordés en série, et ledit circuit à déconnexion rapide comprend une diode (D$_{51}$, D$_{61}$) et un transistor bipolaire PNP (Q$_5$, Q$_6$) raccordés en configuration d'asservissement.

**4.** Convertisseur à résonance LLC en demi-pont avec redresseurs synchrones à commande externe (SR$_S$) selon la revendication 1, comprenant en outre un distributeur de signaux construit par deux diodes (D$_7$, D$_8$) en configuration à anode commune, étant donné que ledit transformateur différentiel (T$_3$) comprend un bobinage secondaire (N$_S$) et présente un rapport de tours primaire à secondaire de 1:1, ladite anode commune est raccordée à ladite borne de terre secondaire et lesdites deux cathodes dudit distributeur de signaux sont raccordées à deux bornes dudit bobinage secondaire (N$_S$) dudit transformateur différentiel (T$_3$) et desdites deux grilles desdits premier et deuxième transformateurs redresseurs synchrones.

FIG.1

(Prior art)

FIG.2a

(Prior art)

FIG.2b
(Prior art)

FIG.2c

(Prior art)

FIG.3a

FIG.3b

FIG.4a

FIG.4b

FIG.4c

FIG.5a

FIG.5b

FIG.6a

FIG.6b

FIG.6c

**EP 2 107 674 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6111769 A